# EUROPEAN PATENT APPLICATION

(11) **EP 4 763 897 A1**
(43) Date of publication of application: **24.06.2026**
(21) Application number: 24307214.7
(22) Date of filing: 19.12.2024
(51) Int. Cl.: C08J 9/16, C08J 9/32, C08J 9/00

(54) **COMPOSITION OF POLYAMIDE AND EXPANDABLE MICROSPHERES**

(71) Applicant: ARKEMA FRANCE, 92800 Puteaux (FR)
(72) Inventor: DAVID, Romain, Kyoto, 600-8815 (JP); TESTUD, Blandine, 27470 Serguigny (FR); MA, YiYuan, Changshu, 215522 (CN); PRENVEILLE, Thomas, King of Prussia, PA 19406 (US)
(74) Representative: Bandpay & Greuter

(57) **Abstract**

The invention relates to a composition comprising at least one thermoplastic polyamide, wherein the average carbon content of the repeating units of said at least one thermoplastic polyamide is greater than or equal to 7; from 0.1 to 6.0 % by weight of expandable microspheres, based on the total weight of the composition; and optionally at least one additional thermoplastic polymer; wherein the composition has a melt flow index lower than or equal to 150 g/10 min.

The invention also relates to a method for preparing such a composition, to an expanded composition obtainable from such a composition and to a method for producing said expanded composition.

## Description

### Technical field

The present invention relates to new compositions based on thermoplastic polyamide that are expandable, in particular in injection and extrusion processes, as well as to expanded compositions formed from said compositions and to methods for producing said compositions.

### Technical background

Various polymer foams or expanded structures are used in particular in the field of sports equipment, personal protective elements, electrical and electronic equipment or in other products for industrial or consumer markets.

Such applications require particular physical properties such as good ductility and high impact strength.

There are different technologies allowing to produce a porous structure from thermoplastic resin compositions. Some of them are based on the use of expandable microspheres in the matrix of the polymer to be foamed.

Document CN 107903625 describes a composite material comprising, *inter alia,* nylon 6, a cyclic olefin copolymer, a microsphere foaming agent, a compatibilizer, a bacteriolytic enzyme and a nanophotocatalyst, which is more particularly used in the automotive industry.

Document CN 114656681 discloses a method for preparing a microsphere foamed nylon material comprising melting caprolactam monomers and mixing them with an initiator and a microsphere foaming agent; adding a catalyst and placing the mixture into a mold; crushing and granulating the molded mixture to obtain a masterbatch; mixing the obtained masterbatch with nylon in an extruder; and injection molding the extruded material to produce the microsphere foamed nylon material.

Document CN 117362995 describes a powder for use in selective laser sintering comprising a nylon resin, expandable microspheres, two nucleating agents, nanoelastic particles, a coupling agent, a lubricant, an antioxidant and flow aids.

There is a need for a composition based on polyamide which can be used to produce an expanded material that is lightweight, with a low density and having good mechanical properties such as good ductility, high elasticity and high impact strength (or impact resistance).

### Summary of the invention

It is a first object of the invention to provide a composition comprising:
- at least one thermoplastic polyamide, wherein the average carbon content of the repeating units of said at least one thermoplastic polyamide is greater than or equal to 7;
- from 0.1 to 6.0 % by weight of expandable microspheres, based on the total weight of the composition; and
- optionally at least one additional thermoplastic polymer selected from polyolefins;
wherein the composition has a melt flow index lower than or equal to 150 g/10 min.

In some embodiments, the average carbon content of the repeating units of the at least one thermoplastic polyamide is greater than or equal to 8, preferably greater than or equal to 9, more preferably greater than or equal to 10.

In some embodiments, the at least one thermoplastic polyamide is selected from PA 11, PA 12, PA 5.10, PA 6.10, PA 6.12, PA 6.13, PA 10.9, PA 10.14, PA 12.9, and copolymers thereof and mixtures thereof.

In some embodiments, the composition comprises the expandable microspheres in an amount of from 0.5 to 5.0 % by weight, preferably from 1.0 to 4.0 % by weight, based on the total weight of the composition.

In some embodiments, the expandable microspheres have an expansion start temperature greater than or equal to 230°C, preferably of from 235 to 275°C, and/or a maximum expansion temperature lower than or equal to 310°C, preferably of from 260 to 300°C.

In some embodiments, the at least one additional thermoplastic polymer is a polyethylene and/or an ethylene/vinyl acetate copolymer, preferably LDPE and/or an ethylene/vinyl acetate copolymer.

In some embodiments, the at least one additional thermoplastic polymer is present in an amount of from 0 to 6% by weight, in particular from 0.1 to 6 % by weight, preferably from 0.5 to 5 % by weight, more preferably from 1 to 4 % by weight, based on the total weight of the composition.

In some embodiments, the composition comprises less than or equal to 2 % by weight, preferably less than or equal to 1 % by weight, of LDPE, preferably of polyethylene, more preferably of polyolefin; preferably, the composition is devoid of LDPE, preferably of polyethylene, more preferably of polyolefin.

In some embodiments, the composition further comprises at least one compatibilizer, preferably selected from the group consisting of polyolefins functionalized with maleic anhydride and/or glycidyl methacrylate.

In some embodiments, the composition further comprises at least one reinforcement agent, preferably selected from the group consisting of glass fibers, carbon fibers, basalt fibers, synthetic fibers, calcium carbonate, barium sulfate, silicon oxide, ceramics and mixtures thereof.

In some embodiments, the composition further comprises at least one UV stabilizer and/or UV absorber, preferably selected from the group consisting of phenolic stabilizers, phosphite stabilizers, hindered amine light stabilizers, inorganic stabilizers and combinations thereof.

In some embodiments, the composition is in the form of pellets or in the form of a powder, preferably in the form of pellets.

The invention also relates to an expanded composition obtainable from expanding a composition as described above.

In some embodiments, the expanded composition has a melt flow index lower than or equal to 150 g/10 min, preferably from 1 to 150 g/10 min, more preferably from 10 to 110 g/10 min.

In some embodiments, the expanded composition has a density from 0.4 to 1.1 g/cm³.

The invention also relates to an article consisting of an expanded composition as described above, or comprising at least one element consisting of an expanded composition as described above, preferably selected from soles of sports shoes, balls, gloves, personal protective equipment, automobile and railway parts, construction parts and parts of electrical and electronic equipment.

The invention also relates to a method for preparing a composition as described above, comprising the steps of:
- providing the at least one thermoplastic polyamide;
- providing the expandable microspheres; and
- compounding in an extruder the at least one thermoplastic polyamide and the expandable microspheres.

The invention also relates to a method for preparing a composition as described above, comprising the steps of:
- providing the at least one thermoplastic polyamide in the form of a powder;
- providing the expandable microspheres; and
- dry-blending the powder of thermoplastic polyamide and the expandable microspheres.

In some embodiments, the expandable microspheres are introduced into the extruder as a powder consisting of the expandable microspheres.

In some embodiments, the expandable microspheres are provided in the form of a masterbatch comprising the expandable microspheres and the at least one additional thermoplastic polymer selected from polyolefins.

The invention also relates to a method for producing an expanded composition as described above, comprising expanding a composition as described above by heating said composition.

In some embodiments, the expanding step is carried out by injection molding or extrusion, preferably by injection molding.

The present invention enables to meet the abovementioned need. In particular, the invention provides a composition of thermoplastic polyamide making it possible to obtain an expanded composition having a relatively low density, good recyclability, low yellow index and good mechanical properties, such as good ductility, high elongation at break, good impact strength, high elasticity, high hardness and high flexural modulus. In addition, the composition of the invention and the expanded composition prepared therefrom exhibit high hydrolysis resistance and zinc chloride resistance, low moisture uptake and good mechanical property stability.

This is achieved by the combination of a thermoplastic polyamide having repeating units of a certain length with expandable microspheres in a composition having a specific melt viscosity. This combination of specific features surprisingly makes it possible to achieve the combination of the above-mentioned beneficial properties.

According to advantageous embodiments, the expandable microspheres have particular expansion start and maximum expansion temperatures. It was discovered that expandable microspheres having those specific expansion start and maximum expansion temperatures are particularly adapted to a use with long-chain thermoplastic polyamides in compositions of high melt viscosity, making it possible to prepare an expandable composition in conditions that allow for good dispersion of the microspheres in the thermoplastic polyamide matrix and low yellowing, while maintaining the beneficial properties such as high hydrolysis resistance, high zinc chloride resistance, low moisture uptake, high ductility and high impact strength conferred by long-chain thermoplastic polyamides.

According to other advantageous embodiments, the composition of the invention can be prepared by compounding the thermoplastic polyamide and the expandable microspheres in an extruder. This makes it possible to achieve a better dispersion of the expandable microspheres in the thermoplastic polyamide matrix and to avoid dusting issues that can occur with dry-blending of powders. Moreover, the processability of the composition is improved, which makes it possible to eliminate the need for a carrier polymer for the expandable microspheres (masterbatch), which avoids any potential compatibility issues between the matrix of the composition and the carrier polymer and which improves the mechanical properties of the composition produced. This preparation process is further improved by the use of expandable microspheres having particular expansion start and maximum expansion temperatures. In such particularly advantageous embodiments, the use of expandable microspheres having a high expansion start temperature prevents expansion of said expandable microspheres during the compounding process at the temperatures necessary to melt the long-chain thermoplastic polyamide. Moreover, the maximum expansion temperature of the expandable microspheres is low enough to enable a subsequent expanding process at temperatures which make it possible to limit, or even avoid, yellowing of the thermoplastic polyamide that can occur when the polyamide is subjected to high temperatures.

### Detailed description

The invention will now be described in more detail without limitation in the following description.

Unless otherwise mentioned, the percentages in the present application are percentages by weight.

In the present text, the amounts indicated for a given species can apply to this species according to all its definitions (as mentioned in the present text), including the more restrictive definitions.

### Expandable composition

The composition of the invention comprises at least one thermoplastic polyamide (PA).

The thermoplastic polyamide may be a homopolyamide and/or a copolyam ide.

The term *"polyamide"* means the products of polymerization of one or more monomers chosen from:
- monomers of amino acid or aminocarboxylic acid type, and preferably alpha,omega-aminocarboxylic acids, preferably having from 6 to 14 carbon atoms, more preferably having from 8 to 14 carbon atoms;
- monomers of lactam type preferably having from 3 to 18 carbon atoms, more preferably from 8 to 18 carbon atoms, in the main ring and which may be substituted;
- monomers of "diamine.diacid" type resulting from the reaction between an aliphatic diamine preferably having from 2 to 48 carbon atoms, more preferentially from 2 to 20 carbon atoms, and a dicarboxylic acid preferably having from 4 to 48 carbon atoms, more preferably from 4 to 20 carbon atoms; and
- mixtures thereof, with monomers containing a different carbon number in the case of mixtures between a monomer of amino acid type and a monomer of lactam type.

In the present description of the polyamides, the term "*monomer*" should be taken to mean *"repeating unit*". Indeed, a special case is where a repeating unit of the polyamide consists of the combination of a diacid with a diamine. It is considered that it is the combination of a diamine and a diacid, that is to say the diamine.diacid pair (in an equimolar amount), which corresponds to the monomer. This is explained by the fact that, individually, the diacid or the diamine is only a structural unit, which is not sufficient on its own to form a polymer.

For the purposes of the present invention, the thermoplastic polyamide consists solely of polyamide. In particular, it does not comprise any block of another type, such as, for example, a polyether block, polyester block, polysiloxane block, polyolefin block or polycarbonate block. More particularly, the thermoplastic polyamide is not a copolymer comprising polyamide blocks and polyether blocks. The composition according to the invention may comprise a polyamide, comprising a block other than a polyamide block, provided that it also comprises a thermoplastic polyamide consisting of polyamide.

When the polyamide is a homopolyamide, it is the product of polymerization of a single monomer. When the polyamide is a copolyamide, it is the product of polymerization of at least two different monomers.

Advantageously, three types of polyamides may be used.

According to a first type, the thermoplastic polyamides originate from the condensation of a dicarboxylic acid, in particular those having from 4 to 48 carbon atoms, preferably those having from 4 to 20 carbon atoms, more preferentially from 6 to 18 carbon atoms, and of an aliphatic or aromatic diamine, in particular those having from 2 to 48 carbon atoms, preferably those having from 2 to 20 carbon atoms, more preferentially from 5 to 14 carbon atoms, provided that the average carbon content of the resulting repeating units is greater than or equal to 7 (as defined below).

As examples of dicarboxylic acids, mention may be made of 1,4-cyclohexanedicarboxylic acid, butanedioic acid, adipic acid, azelaic acid, suberic acid, sebacic acid, dodecanedicarboxylic acid, octadecanedicarboxylic acid, terephthalic acid and isophthalic acid, but also dimerized fatty acids.

As examples of diamines, mention may be made of ethylenediamine, tetramethylenediamine, pentamethylenediamine, hexamethylenediamine, 1,10-decamethylenediamine, dodecamethylenediamine, trimethylhexamethylenediamine, the isomers of bis(4-aminocyclohexyl)methane (BACM), bis(3-methyl-4-aminocyclohexyl)methane (BMACM) and 2,2-bis(3-methyl-4-aminocyclohexyl)propane (BMACP), para-aminodicyclohexylmethane (PACM), isophoronediamine (IPDA), 2,6-bis(aminomethyl)norbornane (BAMN) and piperazine (Pip).

Advantageously, polyamides PA 5.12, PA 5.13, PA 5.14, PA 5.16, PA 5.18, PA 6.10, PA6.12, PA 6.14, PA 6.18, PA 9.12, PA 10.10, PA 10.12, PA 10.14, PA 10.18, PA 9.T, PA10.T and PA 12.T are used. In the notation PA X.Y, X represents the number of carbon atoms derived from the diamine residues and Y represents the number of carbon atoms derived from the diacid residues, conventionally.

According to a second type, the thermoplastic polyamides result from the condensation of one or more α,ω-aminocarboxylic acids and/or of one or more lactams having from 7 to 18 carbon atoms, preferably from 8 to 14 carbon atoms, in the presence of a dicarboxylic acid having from 4 to 48 carbon atoms, preferably from 4 to 20 carbon atoms, or of a diamine. As examples of lactams, mention may be made of oenantholactam and lauryllactam. As examples of α,ω-aminocarboxylic acids, mention may be made of aminocaproic acid, 7-aminoheptanoic acid, 10-aminodecanoic acid, 11-aminoundecanoic acid and 12-aminododecanoic acid.

Advantageously, the polyamides of the second type are PA 10 (polydecanamide), PA 11 (polyundecanamide) or PA 12 (polydodecanamide). In the notation PA X, X represents the number of carbon atoms derived from amino acid or lactam residues.

According to a third type, the thermoplastic polyamides result from the condensation of at least one α,ω-aminocarboxylic acid (or a lactam), at least one diamine and at least one dicarboxylic acid.

In this case, the polyamides are prepared by polycondensation:
- of the linear aliphatic or aromatic diamine(s) having X carbon atoms;
- of the dicarboxylic acid(s) containing Y carbon atoms; and
- of the comonomer(s) {Z}, chosen from lactams and α,ω-aminocarboxylic acids containing Z carbon atoms and equimolar mixtures of at least one diamine containing X1 carbon atoms and of at least one dicarboxylic acid containing Y1 carbon atoms, (X1, Y1) being different from (X, Y),

- said comonomer(s) {Z} being introduced in a weight proportion advantageously ranging up to 50%, preferably up to 20%, even more advantageously up to 10% relative to the total amount of polyamide-precursor monomers;
- in the presence of a chain limiter chosen from dicarboxylic acids.

Advantageously, the dicarboxylic acid containing Y carbon atoms is used as the chain limiter, said dicarboxylic acid being introduced in excess relative to the stoichiometry of the diamine(s).

According to one variant of this third type, the polyamides result from the condensation of at least two α,ω-aminocarboxylic acids or of at least two lactams containing from 6 to 12 carbon atoms or of one lactam and one aminocarboxylic acid having a different number of carbon atoms, optionally in the presence of a chain limiter. As examples of aliphatic α,ω-aminocarboxylic acids, mention may be made of aminocaproic acid, 7-aminoheptanoic acid, 10-aminodecanoic acid, 11-aminoundecanoic acid and 12-aminododecanoic acid. As examples of lactams, mention may be made of caprolactam, oenantholactam and lauryllactam. As examples of aliphatic diamines, mention may be made of pentamethylenediamine, hexamethylenediamine, dodecamethylenediamine and trimethylhexamethylenediamine. As examples of cycloaliphatic diacids, mention may be made of 1,4-cyclohexanedicarboxylic acid. As examples of aliphatic diacids, mention may be made of butanedioic acid, adipic acid, azelaic acid, suberic acid, sebacic acid, dodecanedioic acid, dimerized fatty acids (these dimerized fatty acids preferably have a dimer content of at least 98%; they are preferably hydrogenated; they are, for example, products sold under the tradename "PRIPOLO" by CRODA, or under the tradename EMPOL^{®} by BASF, or under the tradename Radiacid^{®} by the company OLEON), and polyoxyalkylene α,ω-diacids. As examples of aromatic diacids, mention may be made of terephthalic acid (T) and isophthalic acid (I). As examples of cycloaliphatic diamines, mention may be made of the isomers of bis(4-aminocyclohexyl)methane (BACM), bis(3-methyl-4-aminocyclohexyl)methane (BMACM) and 2,2-bis(3-methyl-4-aminocyclohexyl)propane (BMACP), and para-aminodicyclohexylmethane (PACM). Other diamines that may be used include isophoronediamine (IPDA), 2,6-bis(aminomethyl)norbornane (BAMN) and piperazine.

As examples of polyamides of the third type, mention may be made of PA 6.6/6.10/11/12, PA 6/11, PA 6/12 and PA 11/12.

The notations PA X/Y, PA X/Y/Z, etc. relate to copolyamides wherein X, Y, Z, etc. represent homopolyamide units as described above.

According to the invention, the repeating units of the thermoplastic polyamide have an average carbon content of greater than or equal to 7. This makes it possible to achieve a composition with high hydrolysis resistance and zinc chloride resistance and low moisture uptake. Preferably, the repeating units of the thermoplastic polyamide have an average carbon content of greater than or equal to 8, more preferably greater than or equal to 9, even more preferably greater than or equal to 10, for example greater than or equal to 11.

By "average *carbon content of the repeating units"* it is meant the average of the numbers of carbon atoms of each repeating unit present in the thermoplastic polyamide, weighted by the molar proportion of said repeating unit in the thermoplastic polyamide. For example, for a PA X/Y as defined above comprising a mol % of PA X and b mol % of PA Y (a % + *b* % representing 100 mol % of the polyamide), the average carbon content is: (a*X + b*Y)/100. When the thermoplastic polyamide comprises a single repeating unit, as in the case of PA X or of PA X.Y as defined above, the average carbon content of the repeating units of the polyamide is equal to the number of carbon atoms of said repeating unit, considering that a polyamide repeating unit contains, in a known manner, only one amide function. In the case of a polyamide PA X, the number of carbon atoms of the repeating unit is X. In the case of a polyamide PA X.Y, the number of carbon atoms of the repeating unit is (X+Y)/2 since the unit X.Y comprises two amide functions.

Preferably, the average carbon content of the repeating units of the thermoplastic polyamide according to the invention is from 7 to 14, more preferably from 8 to 14, even more preferentially from 8 to 12. In certain embodiments, this average carbon content of the repeating units is from 7 to 8, or from 8 to 9, or from 9 to 10, or from 10 to 11, or from 11 to 12, or 12 to 13, or 13 to 14, or 14 to 15, or 15 to 18, or 18 to 22, or 22 to 30, or 30 to 40.

Advantageously, the thermoplastic polyamide used in the invention comprises, or consists of, a polyamide PA 10, PA 11, PA 12, PA 5.9, PA 5.10, PA 5.12, PA 5.13, PA 5.14, PA 5.16, PA 5.18, PA 5.36, PA 6.9, PA 6.10, PA 6.12, PA 6.13, PA 6.14, PA 6.16, PA 6.18, PA 6.36, PA 7.12, PA 7.13, PA 7.14, PA 10.4, PA 10.9, PA 10.10, PA 10.12, PA 10.13, PA 10.14, PA 10.16, PA 10.18, PA 10.36, PA 10.T, PA 12.4, PA 12.9, PA 12.10, PA 12.12, PA 12.13, PA 12.14, PA 12.16, PA 12.18, PA 12.36, PA 9.T, PA10.T, PA 12.T, or mixtures or copolymers thereof; preferably a polyamide PA 11, PA 12, PA 5.12, PA 5.14, PA 5.16, PA 6.10, PA 6.12, PA 6.13, PA 6.14, PA 10.9, PA 10.10, PA 10.12, PA 10.13, PA 10.14, PA 12.9, or mixtures or copolymers thereof, more preferably a polyamide PA 11, PA 12, PA 5.10, PA 6.10, PA 6.12, PA 6.13, PA 10.9, PA 10.14, PA 12.9, or mixtures or copolymers thereof.

Preferably, the thermoplastic polyamide has a melting temperature lower than or equal to 230°C, more preferably lower than or equal to 218°C. The melting temperature may advantageously be measured by differential scanning calorimetry (DSC) according to ISO 11357-3:2018 "Plastics - Differential scanning calorimetry (DSC) Part 3".

The thermoplastic polyamide advantageously has a number average molar mass (Mn) of from 10000 to 50000 g/mol, preferably from 15000 to 45000 g/mol, more preferably from 20000 to 40000 g/mol. In some embodiments, the polyamides may have a number average molar mass of from 10000 to 15000 g/mol, or from 15000 to 20000 g/mol, or from 20000 to 25000 g/mol or from 25000 to 30000 g/mol, or from 30000 to 35000 g/mol, or from 35000 to 40000 g/mol, or from 40000 to 45000 g/mol, or from 45000 to 50000 g/mol.

The number-average molar mass of the polyamide can be measured by gel permeation chromatography (GPC or size exclusion chromatography), in particular according to ISO 16014-1: 2012, 16014-2:2012, and 16014-3:2012. More particularly, the following parameters and conditions can be used for the measurement:
- Instrument: Waters Alliance 2695;
- Solvent: hexafluoroisopropanol stabilized with 0.05 M potassium trifluoroacetate;
- Flow rate: 1 mL/minute;
- Column temperature: 40°C ;
- Two columns in series: 1000 Å PFG and 100 Å PFG (PPS);
- Sample concentration: 2 g/L (dissolved at room temperature for 24 hours);
- Sample filtration: Using a syringe equipped with an ACRODISC PTFE filter, 25 mm diameter, 0.2 µm porosity;
- Injection volume: 100 µL;
- Refractive index detection: at 40°C with UV detection at 228 nm;
- Calibration: using PMMA standards from 1,900,000 to 402 g/mol. Calibration curve modeled by a fifth-degree polynomial.

The thermoplastic polyamides can be prepared by condensation of the polyamide precursors (that is to say of the monomers as described above).

The thermoplastic polyamide may advantageously be present in the composition in an amount of from 14 to 99.9 % by weight, preferably from 27 to 99.5 % by weight, more preferably from 39.8 to 99 % by weight, based on the total weight of the composition. In other advantageous embodiments, the thermoplastic polyamide may be present in the composition in an amount of from 50 to 99.9 % by weight, preferably from 60 to 99.5 % by weight, more preferably from 70 to 99 % by weight, based on the total weight of the composition. For example, the amount of the thermoplastic polyamide in the composition may be from 14 to 30 % by weight, or from 30 to 40 % by weight, or from 40 to 50 % by weight, or from 50 to 60 % by weight, or from 60 to 70 % by weight, or from 70 to 80 % by weight, or from 80 to 85 % by weight, or from 85 to 90 % by weight, or from 90 to 92 % by weight, or from 92 to 94 % by weight, or from 94 to 95 % by weight, or from 95 to 96 % by weight, or from 96 to 97 % by weight, or from 97 to 98 % by weight, or from 98 to 99 % by weight, or from 99 to 99.5 % by weight, or from 99.5 to 99.9 % by weight. In some embodiments, the amount of the thermoplastic polyamide in the composition is from 94 to 99.9 % by weight.

The composition may comprise one thermoplastic polyamide as described above, or a mixture of thermoplastic polyamides as described above (for example, at least two thermoplastic polyamides as described above).

The composition may also comprise one or more thermoplastic polyamides wherein the average carbon content of the repeating units is lower than 7, provided that the composition comprises at least one thermoplastic polyamide wherein the average carbon content of the repeating units is greater than or equal to 7. However, preferably, all the thermoplastic polyamides of the composition are as described above (and in particular have an average carbon content of the repeating units greater than or equal to 7).

The composition of the invention also comprises expandable microspheres. The expandable microspheres according to the present invention include an outer shell, typically a polymer shell, and a foaming agent (liquid and/or gas) encapsulated inside the outer shell.

In context of the present invention, a foaming agent is also called an expanding agent.

The expandable microspheres are typically heat-expandable. Upon heating, the outer shell softens and the foaming agent inside the microsphere changes state to create a large volume of gas with high pressure which will expand the microsphere substantially. Preferably, the foaming agent is a liquid (at room temperature) that becomes a gas by heating.

Preferably, the foaming agent comprises, or is, one or more hydrocarbons. Examples of hydrocarbons suitable as foaming agent are methane, ethane, ethylene, propane, propene, n-butane, isobutane, butene, isobutene, n-pentane, isopentane, neopentane, n-hexane, isohexane, n-heptane, isoheptane, n-octane, isooctoane, n-nonane, isononane, n-decane, isodecane, n-dodecane, isododecane, isohexadecane, petroleum ethers, isoparaffin mixtures, and any mixture thereof. Other foaming agents than can be used according to the invention include chlorofluorocarbons such as CCl₃F, CCl₂F₂, CClF₃, and CClF₂-CClF₂; and tetraalkylsilanes such as tetramethylsilane, trimethylethylsilane, trimethylisopropylsilane, and trimethyl-n-propylsilane. The foaming agent may be a single substance or may be a combination of two or more of different substances, in particular as described above. The foaming agent may in particular comprise isodecane, and more particularly be a mixture of isododecane and isooctane or a mixture of isododecane and isohexadecane

Preferably, the outer shell comprises at least one polymer. The outer shell may consist of the at least one polymer.

Advantageously, the outer shell comprises at least a polymer containing, or consisting of, one or more units selected from units derived from nitrile monomers, such as acrylonitrile, methacrylonitrile, α-chloro acrylonitrile, α-ethoxy acrylonitrile, and fumaronitrile; monomers containing carboxyl groups, such as acrylic acid, methacrylic acid, itaconic acid, maleic acid, fumaric acid, and citraconic acid; vinylidene chloride; vinyl acetate; (meth)acrylates, such as methyl(meth)acrylate, ethyl (meth)acrylate, n-butyl(meth)acrylate, isobutyl (meth)acrylate, t-butyl(meth)acrylate, isobornyl(meth)acrylate, cyclohexyl(meth)acrylate, benzyl (meth)acrylate, and β-carboxyethyl acrylate; styrene monomers, such as styrene, α-methyl styrene, and chlorostyrene; and amide monomers, such as acrylamide, substituted acrylamide, methacrylamide, and substituted methacrylamide. The polymer may be a homopolymer or a copolymer. Suitable copolymers for the outer shell include vinylidene chloride-methyl methacrylate-acrylonitrile copolymer, methyl methacrylate-acrylonitrile-methacrylonitrile copolymer, methyl methacrylate-acrylonitrile copolymer, methacrylate-acrylonitrile copolymer, methacrylate-acrylonitrile copolymer, methyl methacrylonitrile-acrylonitrile copolymer, acrylonitrile-methacrylonitrile-itaconic acid copolymer and combination thereof.

The outer shell may comprise one polymer as described above or a mixture of polymers as described above. The outer shell may consist of one or more polymers as described above.

The expandable microsphere may be produced by suspension-polymerizing one or more types of polymerizable monomer in the presence of the foaming agent in an aqueous dispersion medium, preferably containing a dispersion stabilizer.

The average particle size of the expandable microspheres is not particularly limited. Preferably, the expandable microspheres have an average particle size of from 1 to 200 µm, more preferably from 3 to 150 µm, even more preferably from 5 to 100 µm, further preferably from 10 to 50 µm, further preferably from 15 to 40 µm, such as from 15 to 30 µm.

The expandable microspheres of the present invention preferably have an expansion start temperature (T_{s_exp}) greater than or equal to 230°C. Using expandable microspheres having such an expansion start temperature makes it possible to prepare the composition by compounding in an extruder while reducing the risk of premature expansion of the microspheres in the extruder. More preferably, the expandable microspheres have an expansion start temperature of from 235 to 275°C, even more preferably from 240 to 265°C. In particular, the expansion start temperature of the expandable microspheres may be from 230 to 235°C, or from 235 to 240°C, or from 240 to 245°C, or from 245 to 250°C, or from 250 to 255°C, or from 255 to 260°C, or from 260 to 265°C, or from 265 to 270°C, or from 270 to 275°C.

The expandable microspheres of the present invention preferably have a maximum expansion temperature (T_{max_exp}) lower than or equal to 310°C. This makes it possible to expand the composition using temperatures low enough to limit or even avoid yellowing of the thermoplastic polyamide. More preferably, the expandable microspheres have a maximum expansion temperature greater than or equal to 260°C, more preferably from 260 to 300°C, even more preferably from 270 to 295°C. In particular, the maximum expansion temperature of the expandable microspheres may be from 260 to 265°C, or from 265 to 270°C, or from 270 to 275°C, or from 275 to 280°C, or from 280 to 285°C, or from 285 to 290°C, or from 290 to 295°C, or from 295 to 300°C, or from 300 to 305°C, or from 305 to 310°C.

Advantageously, the expandable microspheres of the present invention have an expansion start temperature greater than or equal to 230°C and a maximum expansion temperature lower than or equal to 310°C. More advantageously, the expandable microspheres have an expansion start temperature of from 235 to 275°C and a maximum expansion temperature of from 260 to 300°C.

The expansion start temperature and the maximum expansion temperature of the expandable microspheres can be measured using a thermomechanical analyzer. More specifically, a sample of expandable microspheres is heated at a temperature increasing rate of 5°C/min using the thermomechanical analyzer. When a height displacement of the portion occupied by the sample is continuously measured, the expansion start temperature is the temperature at which height displacement begins and the maximum expansion temperature is the temperature at which height displacement is the greatest.

The expandable microspheres are present in the composition in an amount of from 0.1 to 6.0 % by weight, preferably from 0.5 to 5.0 % by weight, more preferably from 1.0. to 4.0 % by weight (based on the total weight of the composition). For example, the composition may comprise the expandable microspheres in an amount of from 0.1 to 0.5 % by weight, or from 0.5 to 1.0 % by weight, or from 1.0 to 1.5 % by weight, or from 1.5 to 2.0 % by weight, or from 2.0 to 2.5 % by weight, or from 2.5 to 3.0 % by weight, or from 3.0 to 3.5 % by weight, or from 3.5 to 4.0 % by weight, or from 4.0 to 4.5 % by weight, or from 4.5 to 5.0 % by weight, or from 5.0 to 5.5 % by weight, or from 5.5 to 6.0 % by weight, based on the total weight of the composition. If the amount of expandable microspheres in the composition is higher than 6.0 % by weight, the mechanical properties of the composition such as elongation at break will be deteriorated.

The composition of the invention may comprise at least one additional thermoplastic polymer selected from polyolefins, more particularly from polyethylene, ethylene/vinyl acetate copolymers (EVA) and mixtures thereof. The polyethylene may in particular be HDPE (high-density polyethylene), LDPE (low-density polyethylene) LLDPE (linear low-density polyethylene), VLDPE (very low-density polyethylene) and/or ULDPE (ultra low-density polyethylene). Preferably, the additional thermoplastic polymer is selected from LDPE, EVA, and mixtures thereof, more preferably the additional thermoplastic is LDPE. Said additional thermoplastic polymer may in particular come from the use of expandable microspheres in the form of a masterbatch, as described below, when preparing the composition.

The additional thermoplastic polymer selected from polyolefins may be present in the composition in an amount of from 0 to 6 % by weight, preferably from 0 to 5 % by weight, more preferably from 0 to 4 % by weight.

In particular, the additional thermoplastic polymer may be present in the composition in an amount of from 0.1 to 6 % by weight, preferably from 0.5 to 5 % by weight, more preferably from 1 to 4 % by weight, based on the total weight of the composition. In some embodiments, the additional thermoplastic polymer is present in an amount of from 0 to 0.1 % by weight, or from 0.1 to 0.5 % by weight, or from 0.5 to 1.0 % by weight, or from 1 to 1.5 % by weight, or from 1.5 to 2 % by weight, or from 2 to 2.5 % by weight, or from 2.5 to 3 % by weight, or from 3 to 3.5 % by weight, or from 3.5 to 4 % by weight, or from 4 to 4.5 % by weight, or from 4.5 to 5 % by weight, or from 5 to 5.5 % by weight, or from 5.5 to 6 % by weight. In some embodiments, the amount (weight) of additional thermoplastic polymer may be the same or substantially the same as the amount of expandable microspheres.

In other embodiments, the composition of the invention comprises less than or equal to 2 % by weight, preferably less than or equal to 1 % by weight, of LDPE, based on the total weight of the composition. More preferably, the composition of the invention comprises less than or equal to 2 % by weight, preferably less than or equal to 1 % by weight, of polyethylene, based on the total weight of the composition. Even more preferably the composition of the invention comprises less than or equal to 2 % by weight, preferably less than or equal to 1 % by weight, of polyolefin, based on the total weight of the composition. Most preferably, the composition is devoid of LDPE, preferably of polyethylene, more preferably of polyolefin. Indeed, polyolefins, and in particular LDPE, have poor compatibility with the thermoplastic polyamides of the invention, and thus the presence of polyolefins in the composition could impair some of its mechanical properties.

The composition of the invention may comprise at least one further additive. Preferably, the total amount of said additives, based on the total weight of the composition, is from 0 to 74 % by weight, preferably from 0.1 to 63 % by weight, more preferably from 0.5 to 52.2 % by weight. In other preferable embodiments, the total amount of additives, based on the total weight of the composition, may be from 0 to 49.9 % by weight, preferably from 0 to 39.9 % by weight, more preferably from 0 to 29.9 % by weight. Said additives may include compatibilizers, reinforcement agents (including fillers), stabilizers (UV stabilizers and UV absorbers), impact modifiers, pigments, adhesion promoter, nucleating agents, plasticizers, other polymers, antioxidants, flame retardants and processing aids.

The composition may comprise at least one compatibilizer, in particular when the composition comprises an additional thermoplastic polymer as described above. The compatibilizer may be any compatibilizer able to increase the compatibility of the thermoplastic polyamide with the expandable microspheres and/or with the additional thermoplastic polymer. The compatibilizer advantageously bears reactive functions which can preferably react with the amine or carboxylic acid functions borne by the thermoplastic polyamide. In particular, the compatibilizer may be selected from the group consisting of functionalized polyolefins containing functional groups such as groups derived from maleic anhydride (MAH) and/or glycidyl methacrylate (GMA).

Preferably, the compatibilizer is present in the composition in an amount of from 0 to 2% by weight, more preferably from 0 to 1.5 % by weight, even more preferably from 0 to 1.2 % by weight.

The composition may comprise the compatibilizer in an amount from 0.1 to 2 % by weight, preferably from 0.2 to 1.5 % by weight, further preferably from 0.3 to 1.2 % by weight, based on the total weight of the composition.

Alternatively, the composition may comprise less than or equal to 0.5 % by weight, preferably less than or equal to 0.1 % by weight, of compatibilizer, based on the total weight of the composition, or more preferably the composition may be devoid of compatibilizer.

The composition may comprise at least one reinforcement agent. The reinforcement agent may be any suitable reinforcement agent. Preferably, the reinforcement agent is selected from the group consisting of glass fibers, carbon fibers, basalt fibers, synthetic fibers such as aramid fibers, fillers, such as for example calcium carbonate, barium sulfate and/or silicon oxide, ceramics and mixtures thereof.

Preferably, the reinforcement agent is present in the composition in an amount of from 0 to 50 % by weight more preferably from 0 to 40 % by weight, even more preferably from 0 to 30 % by weight.

The composition may comprise the reinforcement agent in an amount from 1 to 50 % by weight, more preferably from 3 to 40 % by weight, further preferably from 6 to 30 % by weight, based on the total weight of the composition. In some embodiments, the composition comprises at least 6 % by weight of the reinforcement agent (for example, 6 to 50 % by weight, or 6 to 40 % by weight, or 6 to 30 % by weight, based on the total weight of the composition).

Alternatively, the composition may comprise less than or equal to 1 % by weight, preferably less than or equal to 0.5 % by weight, of reinforcement agent, based on the total weight of the composition, or more preferably the composition may be devoid of reinforcement agent.

The composition may comprise at least one UV stabilizer and/or UV absorber, preferably at least two UV stabilizers and/or UV absorbers. The UV stabilizers and UV absorbers may in particular be selected from phenolic stabilizers, phosphite stabilizers, HALS (hindered amine light stabilizers), inorganic stabilizers and combinations thereof.

Preferably, the UV stabilizers and UV absorbers are present in the composition in an amount of from 0 to 2 % by weight more preferably from 0.05 to 1.5 % by weight, even more preferably from 0.1 to 1 % by weight, based on the total weight of the composition.

The composition may comprise other additives, in particular selected from impact modifiers such as copolymers comprising polyamide blocks and polyether blocks, pigments (such as TiO₂ and other compatible pigments), adhesion promoters (in order to improve the adhesion of the expanded composition to other materials), nucleating agents (in pure form or in concentrated form), for example ZnO, plasticizers, antioxidants, flame retardants, processing aids, for example stearic acid, and other polymers, such as ethylene/acrylate copolymers, ethylene/alkyl(meth)acrylate copolymers, and/or rubbers (in particular to improve elasticity, such as natural rubber, SBR, polybutadiene and/or ethylene-propylene terpolymers), and the mixtures thereof. Typically, the composition can comprise from 0 to 20 % by weight, preferably from 0.5 to 20 % by weight of other additives, based on the total weight of the composition.

In some embodiments, the composition of the invention may comprise, or consist of:
- the at least one thermoplastic polyamide, preferably in an amount of from 14 to 99.9 % by weight;
- from 0.1 to 6.0 % by weight of the expandable microspheres;
- optionally the at least one additional thermoplastic polymer, preferably in an amount of from 0 to 6 % by weight; and
- optionally one or more additives, preferably chosen from the group consisting of compatibilizers, reinforcement agents, impact modifiers, pigments, adhesion promoter, nucleating agents, plasticizers, stabilizers, processing aids, antioxidants, flame retardants and other polymers, preferably in an amount of from 0 to 74 % by weight; more preferably:
   ▪ optionally at least one compatibilizer, preferably in an amount of 0 to 2 % by weight;
   ▪ optionally at least one reinforcement agent, preferably in an amount of 0 to 50 % b weight;
   ▪ optionally at least one UV stabilizer and/or UV absorber, preferably in an amount of 0 to 2 % by weight; and
   ▪ optionally one or more additives, preferably chosen from the group consisting of impact modifiers, pigments, adhesion promoter, nucleating agents, plasticizers, processing aids, antioxidants, flame retardants and other polymers, preferably in an amount of from 0 to 20 % by weight.

Preferably, the composition comprises, or consists of:
- the at least one thermoplastic polyamide, preferably in an amount of from 27 to 99.5 % by weight;
- from 0.5 to 5.0 % by weight of the expandable microspheres;
- optionally the at least one additional thermoplastic polymer, preferably in an amount of from 0 to 5 % by weight; and
- optionally one or more additives, preferably chosen from the group consisting of compatibilizers, reinforcement agents, impact modifiers, pigments, adhesion promoter, nucleating agents, plasticizers, stabilizers, processing aids, antioxidants, flame retardants and other polymers, preferably in an amount of from 0 to 63 % by weight; more preferably:
   ▪ optionally at least one compatibilizer, preferably in an amount of 0 to 1.5 % by weight;
   ▪ optionally at least one reinforcement agent, preferably in an amount of 0 to 40 % b weight;
   ▪ optionally at least one UV stabilizer and/or UV absorber, preferably in an amount of 0 to 1.5 % by weight; and
   ▪ optionally one or more additives, preferably chosen from the group consisting of impact modifiers, pigments, adhesion promoter, nucleating agents, plasticizers processing aids, antioxidants, flame retardants and other polymers, preferably in an amount of from 0 to 20 % by weight.

More preferably, the composition comprises, or consists of:
- the at least one thermoplastic polyamide, preferably in an amount of from 39.8 to 99 % by weight;
- from 1.0 to 4.0 % by weight of the expandable microspheres;
- optionally the at least one additional thermoplastic polymer, preferably in an amount of from 0 to 4 % by weight; and
- optionally one or more additives, preferably chosen from the group consisting of compatibilizers, reinforcement agents, impact modifiers, pigments, adhesion promoter, nucleating agents, plasticizers, stabilizers, processing aids, antioxidants, flame retardants and other polymers, preferably in an amount of from 0 to 52.2 % by weight; more preferably:
   ▪ optionally at least one compatibilizer, preferably in an amount of 0 to 1.2 % by weight;
   ▪ optionally at least one reinforcement agent, preferably in an amount of 0 to 30 % b weight;
   ▪ optionally at least one UV stabilizer and/or UV absorber, preferably in an amount of 0 to 1 % by weight; and
   ▪ optionally one or more additives, preferably chosen from the group consisting of impact modifiers, pigments, adhesion promoter, nucleating agents, plasticizers processing aids, antioxidants, flame retardants and other polymers, preferably in an amount of from 0 to 20 % by weight.

The composition of the invention can be in any suitable form. In particular, the composition may be in the form of pellets or in the form of a powder. Preferably, the composition is in the form of pellets.

The composition according to the invention has a melt flow index (MFI) lower than or equal to 150 g/10 min, preferably from 1 to 150 g/10 min, more preferably from 10 to 110 g/10 min. In particular, the MFI of the composition may be from 1 to 10 g/10 min, or from 10 to 30 g/10 min, or from 30 to 50 g/10 min, or from 50 to 70 g/10 min, or from 70 to 90 g/10 min, or from 90 to 110 g/10 min, or from 110 to 130 g/10 min, or from 130 to 150 g/10 min. The melt flow index is measured at 235°C and at a moisture content below 500 ppm, under a load of 2.16 kg, according to ISO 1133.

### Preparation of the composition

To prepare the composition of the invention, the expandable microspheres may be combined directly with the thermoplastic polyamide (i.e. added alone) or may be combined with the thermoplastic polyamide in the form of a masterbatch.

By *"masterbatch"* is meant in the present text a composition comprising expandable microspheres and at least one thermoplastic polymer (also called "*carrier polymer*" as it is used as a carrier of the expandable microspheres). The use of a masterbatch makes it possible to improve the processability of the expandable microspheres and more particularly to facilitate their mixing with the thermoplastic polyamide of the composition of the invention, in particular when the expandable microspheres and the thermoplastic polyamide are mixed by dry-blending.

The thermoplastic polymer of the masterbatch is preferably selected from polyolefins, more preferably from polyethylene (for example, as described above), ethylene/vinyl acetate copolymers (EVA) and mixtures thereof, further preferably from LDPE, EVA and mixtures thereof, even more preferably the thermoplastic polymer of the masterbatch is LDPE. The thermoplastic polymer of the masterbatch may be a thermoplastic elastomer.

Preferably, in the masterbatch, the amount of the expandable microspheres is from 20 to 80 % by weight, more preferably from 30 to 70 % by weight, even more preferably from 40 to 60 % by weight, and/or the amount of thermoplastic polymer (carrier polymer) is from 20 to 80% by weight, more preferably from 30 to 70 % by weight, even more preferably from 40 to 60 % by weight, based on the total weight of the masterbatch. For example, the masterbatch may comprise substantially 50 % by weight of expandable microspheres and 50 % by weight of thermoplastic polymer. The masterbatch may also comprise additives, such as pigments, fillers or other additives such as those mentioned above.

Most preferably, the expandable microspheres used to prepare the composition of the invention are not in the form of a masterbatch but are combined directly with the thermoplastic polyamide. In particular, the expandable microspheres added to the thermoplastic polyamide are preferably in the form of a powder comprising particles consisting of the expandable microspheres and optionally particles of additives.

The composition of the invention can be prepared by any suitable method. The composition is prepared by mixing the thermoplastic polyamide with the expandable microspheres. The thermoplastic polyamide to be mixed with the expandable microspheres may advantageously be provided in the form of a powder or in the form of pellets, preferably in the form of a powder.

Preferably, the mixing step is carried out by compounding the thermoplastic polyamide (preferably in the form of a powder) and the expandable microspheres (i.e. by mixing the expandable microspheres with the thermoplastic polyamide in the molten state). Advantageously, the compounding of the thermoplastic polyamide with the expandable microspheres takes place in an extruder, for example in a twin-screw extruder. The compounding step is preferably carried out at a temperature greater than the melting temperature (Tm) of the thermoplastic polyamide(s), more preferably greater than or equal to Tm + 20°C, even more preferably greater than or equal to Tm + 30°C, and lower than the expansion start temperature of the expandable microspheres. In the embodiments wherein the mixing step is a compounding step, the expandable microspheres are preferably provided without carrier polymer (in other words, preferably the expandable microspheres are not in the form of a masterbatch). However, the expandable microspheres may alternatively be in the form of a masterbatch as described above.

Alternatively, the mixing step may be carried out by dry-blending the thermoplastic polyamide and the expandable microspheres. The dry-blending step may be performed at room temperature (15-30°C) or at a higher temperature. Preferably the thermoplastic polyamide is in the form of a powder. Preferably, the expandable microspheres are in the form of a masterbatch as described above. The presence of the carrier polymer in the masterbatch enables to improve the mixing of the expandable microspheres with the thermoplastic polyamide.

The additives (compatibilizers, reinforcement agents, other additives as mentioned above...), when present in the composition of the invention, may be mixed with the expandable microspheres and the thermoplastic polyamide in any suitable manner and may independently added to any step of the preparation method of the composition (for example, before, during or after the step of mixing the expandable microspheres and the thermoplastic polyamide). In particular, they may (partly or totally) be premixed with the expandable microspheres and/or with the thermoplastic polyamide before their mixing; and/or they may (partly or totally) be mixed with the expandable microspheres and the thermoplastic polyamide when they are mixed together. The additives may be added in one or several steps, and they may be added in any order. They may be mixed with the expandable microspheres and/or the thermoplastic polyamide by dry-blending or compounding.

### Expanded composition

The invention also relates to an expanded composition obtained or obtainable from expanding the composition of the invention. In other words, the expanded composition corresponds to a composition as described above in which the microspheres have expanded.

The expanded composition of the invention has a reduced density compared to the density of the unexpanded composition. Preferably, the reduction in density of the expanded composition compared to the unexpanded composition is at least 5 %, more preferably at least 10 %, further preferably at least 15 %, for example at least 20%.

The expanded composition has advantageously a density of from 0.4 to 1.1 g/cm³.

The densities of the expanded composition and of the unexpanded composition may be measured at 23°C according to ISO 1183.

Advantageously, the expanded composition has a tan δ at 23°C lower than or equal to 0.05, preferably lower than or equal to 0.04. The tan δ (or loss factor) at 23°C corresponds to the ratio of the loss modulus E" to the modulus of elasticity E' measured at a temperature of 23°C by dynamic mechanical analysis (DMA). The tan δ can be measured according to ISO 6721:2019, the measurement being carried out at a tensile strain of 0.1 %, at a frequency of 1 Hz, and at a heating rate of 2°C/min. The tan δ enables to characterize the elasticity of the composition: the lower the tan δ, the greater the elastic recovery.

Preferably, the expanded composition has a yellow index lower than or equal to 20. The yellow index may be measured according to the standard ASTM E313-96 (D65), particularly using a Konica Minolta spectrocolorimeter with the illuminant D65 at 10° in specular component included (SCI) reflection mode.

The expanded composition according to the invention may be used to manufacture sports equipment, such as soles of sports shoes, ski boots, midsoles, insoles, or functional components soles, in the form of inserts in different parts of the sole (heel or arch, for example), or even components of the tops of shoes in the form of reinforcements or inserts in the structure of the upper shoe, in the form of protections. It may also be used to make balls, sports gloves (e.g. football gloves), components of golf balls, rackets, protective elements (vests, inner helmet or hull elements....).

The expanded composition may have anti-shock, anti-vibration, anti-noise properties and/or haptic properties adapted to capital goods. It may therefore also be used for the manufacture of railway parts, or of various parts in the automobile industry (for example, interior decorative elements), in transport, in electrical and electronic equipment, in construction or in the manufacturing industry.

An advantage of the expanded articles according to the invention is that they may easily be recycled, for example by melting them in an extruder equipped with a degassing outlet (optionally after having cut them into pieces).

### Preparation of the expanded composition

The expanded composition may be prepared by any suitable method involving an expanding step of the composition, i.e. a step leading to the expansion of the microspheres in the composition. Typically, the expanding step involves heating the composition (thereby causing the expansion of the microspheres). As mentioned above, upon heating, the outer shell of the microspheres softens and the expanding agent inside the microsphere becomes a gas, inducing a substantial expansion of the microsphere. Most preferably, the thermoplastic polyamide of the composition subjected to the expanding step is in the molten state.

Preferably, in the expanding step, the composition is heated at a temperature higher than or equal to the expansion start temperature (T_{s_exp}) of the microspheres and preferably lower than or equal to T_{max_exp} + 10°C (T_{max_exp} being the maximum expansion temperature of the microspheres). For example, the composition may be heated at a temperature higher than or equal to T_{s_exp} + 15°C and/or lower than or equal to T_{max_exp} +5°C.

Preferably, the method for preparing the expanded composition also comprises a step of creating a pressure drop in the heated composition. In these embodiments, the pressure drop triggers the expansion of the composition (i.e. the expansion of the microspheres).

Preferably, the expanding step is carried out by injection molding or extrusion.

In particular, the expanding process can be an injection molding process. Advantageously, the injection process comprises a step of introducing the composition into a mold, where preferably a pressure drop in the mold triggers the expansion of the composition. More particularly, the injection molding process may be carried out according to a short shot injection method, a mold opening method or a core-back method. These techniques make it possible to directly produce three-dimensional expanded objects having complex geometries.

Alternatively, the expanding process can be an extrusion process, such as an extrusion process using a single-screw extruder or a twin-screw extruder. Advantageously, the extrusion process comprises a step of introducing the composition into an extruder and a step of extruding the composition, causing the expanding of the composition when it exits the die of the extruder (the expanding being produced by the pressure drop resulting from the exit of the die).

Most preferably, the expansion is performed by injection molding.

## Claims

1. A composition comprising:
- at least one thermoplastic polyamide, wherein the average carbon content of the repeating units of said at least one thermoplastic polyamide is greater than or equal to 7;
- from 0.1 to 6.0 % by weight of expandable microspheres, based on the total weight of the composition; and
- optionally at least one additional thermoplastic polymer selected from polyolefins;
wherein the composition has a melt flow index lower than or equal to 150 g/10 min.

2. The composition of claim 1, wherein the at least one thermoplastic polyamide has a number average molecular weight of from 10000 to 50000 g/mol, preferably from 15000 to 45000 g/mol, more preferably from 20000 to 40000 g/mol.

3. The composition of claim 1 or 2, wherein the average carbon content of the repeating units of the at least one thermoplastic polyamide is greater than or equal to 8, preferably greater than or equal to 9, more preferably greater than or equal to 10; and/or wherein the at least one thermoplastic polyamide is selected from PA 11, PA 12, PA 5.10, PA 6.10, PA 6.12, PA 6.13, PA 10.9, PA 10.14, PA 12.9, and copolymers thereof and mixtures thereof.

4. The composition of any one of claims 1 to 3, having a melt flow index of from 1 to 150 g/10 min, preferably from 10 to 110 g/10 min.

5. The composition of any one of claims 1 to 4, comprising the expandable microspheres in an amount of from 0.5 to 5.0 % by weight, preferably from 1.0 to 4.0 % by weight, based on the total weight of the composition.

6. The composition of any one of claims 1 to 5, wherein the expandable microspheres have an expansion start temperature greater than or equal to 230°C, preferably of from 235 to 275°C, and/or a maximum expansion temperature lower than or equal to 310°C, preferably of from 260 to 300°C.

7. The composition of any one of claims 1 to 6, wherein the at least one additional thermoplastic polymer is a polyethylene and/or an ethylene/vinyl acetate copolymer, preferably LDPE and/or an ethylene/vinyl acetate copolymer; and/or wherein the at least one additional thermoplastic polymer is present in an amount of from 0 to 6% by weight, in particular from 0.1 to 6 % by weight, preferably from 0.5 to 5 % by weight, more preferably from 1 to 4 % by weight, based on the total weight of the composition.

8. The composition of any one of claims 1 to 7, comprising less than or equal to 2 % by weight, preferably less than or equal to 1 % by weight, of LDPE, preferably of polyethylene, more preferably of polyolefin; preferably, the composition is devoid of LDPE, preferably of polyethylene, more preferably of polyolefin.

9. The composition of any one of claims 1 to 8, further comprising at least one compatibilizer, preferably selected from the group consisting of polyolefins functionalized with maleic anhydride and/or glycidyl methacrylate; and/or further comprising at least one reinforcement agent, preferably selected from the group consisting of glass fibers, carbon fibers, basalt fibers, synthetic fibers, calcium carbonate, barium sulfate, silicon oxide, ceramics and mixtures thereof; and/or further comprising at least one UV stabilizer and/or UV absorber, preferably selected from the group consisting of phenolic stabilizers, phosphite stabilizers, hindered amine light stabilizers, inorganic stabilizers and combinations thereof.

10. The composition of any one of claims 1 to 9, in the form of pellets or in the form of a powder, preferably in the form of pellets.

11. An expanded composition obtainable from expanding a composition according to any one of claims 1 to 10.

12. The expanded composition of claim 11, having a melt flow index lower than or equal to 150 g/10 min, preferably from 1 to 150 g/10 min, more preferably from 10 to 110 g/10 min; and/or 16 having a density from 0.4 to 1.1 g/cm³.

13. An article consisting of an expanded composition according to any one of claims 11 to 12, or comprising at least one element consisting of an expanded composition according to any one of claims 11 to 12, preferably selected from soles of sports shoes, balls, gloves, personal protective equipment, automobile and railway parts, construction parts and parts of electrical and electronic equipment.

14. A method for preparing a composition according to any one of claims 1 to 10, comprising the steps of:
- providing the at least one thermoplastic polyamide;
- providing the expandable microspheres; and
- compounding in an extruder the at least one thermoplastic polyamide and the expandable microspheres;
wherein, preferably, the expandable microspheres are introduced into the extruder as a powder consisting of the expandable microspheres.

15. A method for preparing a composition according to any one of claims 1 to 10, comprising the steps of:
- providing the at least one thermoplastic polyamide in the form of a powder;
- providing the expandable microspheres; and
- dry-blending the powder of thermoplastic polyamide and the expandable microspheres.

16. The method of claim 14 or 15, wherein the expandable microspheres are provided in the form of a masterbatch comprising the expandable microspheres and the at least one additional thermoplastic polymer selected from polyolefins.

17. A method for producing an expanded composition according to any one of claims 14 to 16, comprising expanding a composition according to any one of claims 1 to 10 by heating said composition, wherein preferably the expanding step is carried out by injection molding or extrusion, more preferably by injection molding.
